# EUROPEAN PATENT SPECIFICATION

(11) **EP 4 149 815 B1**
(45) Date of publication and mention of the grant of the patent: **28.01.2026**
(21) Application number: 21723662.9
(22) Date of filing: 28.04.2021
(51) Int. Cl.: B61D 17/10, B29C 39/10, B29C 33/00, B29C 39/02

(54) **FLOOR PANEL ASSEMBLIES FOR VEHICLES AND METHOD OF MANUFACTURING THEREOF**
BODENVERKLEIDUNGEN FÜR FAHRZEUGE UND VERFAHREN ZUM HERSTELLEN DAVON
ENSEMBLES PANNEAUX DE PLANCHER POUR VÉHICULES ET LEUR PROCÉDÉ DE FABRICATION

(30) Priority: 15.05.2020 DE 102020113307
(43) Date of publication of application: 22.03.2023
(73) Proprietor: Elbe Flugzeugwerke GmbH, 01109 Dresden (DE)
(72) Inventor: DUNKEL, Albrecht, 01109 Dresden (DE); WITTIG, Matthias, 01109 Dresden (DE); NITSCHE, Steffen, 01109 Dresden (DE); LARS, Rosenbaum, 01109 Dresden (DE)
(74) Representative: LKGLOBAL Partnerschaftsgesellschaft mbB
(86) International application number: PCT/EP2021/061163
(87) International publication number: WO 2021/228554

(56) References cited:
- WO-A1-96/04441
- CZ-B6- 304 341
- GB-A- 1 332 551
- US-A- 3 907 624
- US-A- 5 678 369
- US-A1- 2016 069 086

## Description

### TECHNICAL FIELD

The present disclosure relates to floor panel assemblies for vehicles, in particular rail vehicles such as trains or tramways. In particular, the disclosure relates to connecting individual floor panels. Furthermore, the disclosure relates to a method for manufacturing such a floor panel assembly.

### TECHNICAL BACKGROUND

The floors of means of transport such as aircraft, rail vehicles or buses are often designed with floor panels, either in lightweight construction, for example as honeycomb core panels, or as wooden panels. Such floors may be designed as floating floors, and the floor assembly is constructed from a plurality of individual floor panels that are attached to each other. The individual floor panels are connected to each other in a variety of ways, such as by half milling and gluing, or by similar seams.

US 5 678 369 A describes a refractory/heat insulating panel used in buildings and structures which must have a refractory performance. In the refractory/heat insulating panel, the mechanical strength and the fireproofing performance at the joint portions, which are weak portions in the panel, are increased by integrally forming inorganic boards in the male and female joint portions, filling a light-weight aggregate in the core material located at the male and female joint portions at a high density, or making the density of the core material at the joint portions higher than that at the center of the panel. Further, a nonwoven fabric is inserted between a core material and a surfacing material and between the core material and a backing material, the surfaces of the surfacing material and the backing material facing the core material are embossed, a layer of isocyanurate foam and/or a layer of polyurethane foam are provided in the core material, or a wooden reinforcing material or a pipe-shaped member is buried in the core material to improve the adhesion between the core material and the surfacing material and between the core material and the backing material, the strength of the entire panel, refractory performance, etc. These structures also increase the strength and the refractory performance of the joint portions.

WO 96/04441 A1 describes a dance floor section that includes a core assembly which has a molded edging placed thereon. The core assembly has a central honeycomb material of impregnated cardboard and a frame member extending around the edge of the honeycomb material. Facing and backing pans are added as well as a floor surface to form the core assembly. The edging forms complementary tongues and grooves for connecting to other sections. Lock members mount in the edging and interact with similar lock members of other floor sections for connecting and retaining the edges of the sections so that no spaces are formed.

US 3 907 624 A describes a panel provided with an integral shaped edge that is decorative in nature and cast or molded onto the panel to provide an integral structure. A method of combining the material which forms the decorative integral shaped edge with the panel.

GB 1 332 551 A describes a process for producing panels having an edge strip bonded thereto. In the process, the peripheral edge of the panel is positioned in a mould to define with the mould a mould cavity into which a polyurethane foamable material is injected to form the edge strip. Alternatively in the case of a panel constructed of cover sheets around a filling, the mould may comprise two parts, movable together, upon which the cover sheets are mounted, the arrangement being such that pressure may be applied to the cover sheets to cause adherence to the filling, simultaneously with the moulding of the strip. The method is of particular application in the production of rebate doors.

CZ 304 341 B6 describes a composite sandwich panel, especially panel for floors of conveyance means consisting of an upper coating and a lower coating, a core and an edge section arranged on at least one side of the composite sandwich panel circumference and intended for fastening the panel. The core is performed of aluminium honeycomb, at least one coating is made of self-extinguishing composite and the edge section is made of a composite material, whereby the upper coating rests on the core with an upper overlap and the lower coating rests on the core with a lower overlap, the base of the edge section is fixedly situated between the upper and lower overlaps and the external portion of the edge section overlaps the contour of the upper and lower coatings.

US 2016 / 0 069 086 A1 describes a floor board having connection geometries corresponding to each other and made of plastics, wherein the first connection geometry is provided along two abutting side surfaces and has a groove which is open toward the bottom and is bordered by a lip toward the outside, and the groove has an undercut along its walls. The second connection geometry is provided along the abutting side surfaces and has a groove which is open toward the top and is bordered by a lip toward the outside, and the groove has an undercut along its walls. The lip of the first connection geometry and the lip of the second connection geometry each have at least one slot at least in sections. The invention also relates to a floor board having a connecting element that is made of a multi-component material.

### BRIEF DESCRIPTION

It may be regarded as an object of the invention to provide a floor panel assembly with connecting elements for easy connection of the individual floor panels, which have the necessary force transmission properties and allow a high surface evenness of the floor.

This object is solved by the subject-matter of the independent claims. Further embodiments result from the dependent claims as well as from the following description.

According to a first aspect of the invention, a floor panel assembly includes a first floor panel, a second floor panel, and a male connection portion and a female connection portion. The male connection portion is attached to a side surface of the first floor panel. The male connection portion includes a protrusion extending along the male connection portion. The female connection portion is attached to a side surface of the second floor panel. The female connection portion includes a recess extending along an entire length of the female connection portion. A first perpendicular distance from a first surface of the first floor panel to an outermost point of the protrusion corresponds to a second perpendicular distance from a first surface of the second floor panel to a deepest point of the recess. As a result, the floor panel assembly has a flat surface when the male connection portion is inserted into the female connection portion in a form-fitting manner. The thickness of the first floor panel is different from The thickness of the second floor panel.

The male connection portion is formed as a counterpart to the female connection portion, i.e., when the male connection portion is inserted into the female connection portion, its outer surface abuts the inner surface of the female connection portion. Preferably, the male connection portion is inserted into the female connection portion such that the connection portions are flush against each other or abut each other in a flush manner. Thus, the male connection portion is positively connected to the female connection portion when the male connection portion is inserted into the female connection portion.

The male and female connection portions are each arranged on a side of the floor panel that is intended to connect the respective floor panel to the next floor panel. For this purpose, the male connection portion and the female connection portion extend in particular along the entire length of the respective side surface or edge of the respective floor panel so as not to leave any gaps in the connection.

The first surfaces of the first floor panel and the second floor panel correspond to the intended or predetermined surface of the finished floor panel assembly, i.e., the surface of the floor when the floor panel assembly is installed in a transportation vehicle, such as a rail vehicle.

In the finished floor panel assembly, the male connection portion is inserted into the female connection portion such that the outermost point of the male connection portion, i.e., the point protruding furthest toward the female connection portion, is located near (e.g., with a small air gap between) or at the lowest point of the female connection portion, i.e., the point where the recess of the female connection portion is deepest. The first floor panel and the second floor panel are then frictionally connected to each other by a compression between converging planes. Therefore, and because of the equal or nearly equal dimensioning of the first vertical distance and the second vertical distance, the first surfaces of the first and second floor panels together form a planar surface which corresponds to the surface of the finished floor panel assembly when the male connection portion of the first floor panel is inserted into the female connection portion of the second floor panel.

In particular, in a non-limiting example, in the floor panel assembly, the surfaces of the individual floor panels may have a height difference from each other of a few tenths of a millimeter, for example less than 0.2 mm, when the male connection portion is inserted into the female connection portion. However, the height difference between the floor panels can be set as precisely as desired. The high surface evenness of the floor panel assembly thus created prevents steps from appearing in a floor covering applied to the finished floor.

The male connection portion and the female connection portion may be formed of any suitable plastic. Preferably, the male connection portion and the female connection portion are made of a two-component rapid casting resin such as polyurethane resin (PUR resin), and the male connection portion and the female connection portion are molded to the floor panels. Casting tools can be produced with high manufacturing accuracy. Therefore, when the top surface of the floor panel assembly is used as a reference surface, the maximum height difference of two floor panels from each other can be achieved with a casting mold despite a manufacturing-related thickness tolerance of the individual panels that is greater than the maximum height difference of the floor panels from each other. The surface serves as a reference for the cast-on geometry of the connection portions.

The first floor panel and the second floor panel may be made of wood, lightweight panels, foam-cored or honeycomb-cored, or any other suitable material or arrangement.

The thickness of the first floor panel differs from the thickness of the second floor panel. This allows a plane or even floor to be laid over areas of the vehicle body despite floor panels of different thicknesses and without height differences in the finished floor. When the connection portions are cast onto the floor panels, the same casting tool can be used for panels of different thicknesses. Since the geometry of the connection portions is referenced only to the surfaces of the panels, a high surface evenness of the floor panel assembly is ensured even for panels of different thicknesses.

The joined panels are connected to each other at a common reference surface in such a way that the male connection portion and the female connection portion align the two joined panels flush with each other at one surface despite the different material thickness of the two panels. Thus, it is possible for the two panels with different material thicknesses to have a common surface without a step in the connected state, i.e., there is no difference in height on this side at the transition from the first panel to the second panel.

According to one embodiment, the first floor panel further comprises a first cover layer, a second cover layer opposite the first cover layer, and a core layer disposed between the first cover layer and the second cover layer. Also, the second floor panel has a first cover layer, a second cover layer opposite the first cover layer, and a core layer disposed between the first cover layer and the second cover layer.

In particular, the density of the core layers may be significantly less than the density of the cover layers. The core layers may consist of foam cores made of any suitable material, such as PVC foam (polyvinyl chloride foam), PET foam (polyethylene terephthalate foam), or any other suitable foam. However, other lightweight materials, such as cork, can also be used. However, the core layers can also be honeycomb cores of any type, such as with honeycombs of plastics, cardboard, or other suitable materials with the required properties. Preferably, however, the core layers are designed as foam cores with PET foam.

The cover layers are formed from stable materials with higher density. Any suitable material such as wood, plastics or various laminates can be used for this purpose. Preferably, the cover layers are made of glass fiber mesh impregnated in phenolic resin or of carbon fiber laminate.

The stable cover layers distribute compressive loads perpendicular to the surface normal of the floor panel evenly to the lightweight core layers, which enables the core layers to absorb the compressive loads. In addition, shear loads during bending of the floor panels are well absorbed by the lightweight material of the core layers. The cover layers, on the other hand, resist tensile and compressive loads in the plane of the panels.

According to another embodiment, the first cover layer and the second cover layer of the first floor panel protrude with respect to the core layer in the direction of the side surface of the first floor panel (i.e., they protrude beyond the core layer) and receive the core layer at least partially therebetween. Also, the first cover layer and the second cover layer of the second floor panel protrude with respect to the core layer toward the side surface of the second floor panel and receive the female connection portion at least partially therebetween.

By protruding with respect to and beyond the core layer in the direction of the side surface, it is meant that a length of the first cover layer and a length of the second cover layer are greater than a corresponding length of the core layer or that the core layer is partially removed at an edge of a floor panel between the cover layers. Thus, at an end of the floor panels where the male connection portion or the female connection portion is to be attached, there is a space between the first cover layer and the second cover layer that is not occupied by the core layer.

As the cover layers protrude from the core layer, the male and female connection portions can additionally be held in place by the protruding parts of the cover layers. Compared with a purely two-dimensional or planar fastening to the respective side surface of the respective floor panel, the connection portions are thus additionally stabilized by the cover layers. On the one hand, the connection area between the connection portions and the floor panel is thus enlarged, resulting in a greater holding force between the connection element, and on the other hand, the connection portions are better protected by the stable cover layers against buckling due to compressive loads in the direction of the surface normals of the floor panels.

According to a further embodiment, the first cover layer and the second cover layer of the first floor panel also protrude to a different extent beyond the core layer. The first cover layer and the second cover layer of the second floor panel also protrude to a different extent beyond the core layer. That cover layer of the first floor panel which protrudes further includes at least one, preferably two, rows of holes in the protruding part of the cover layer which extend along the direction of extension of the male connection portion. The rows of holes are spaced apart from each other, and the holes in a row of holes may be evenly or unevenly spaced apart from each other. Also, like the first floor panel, that cover layer of the second floor panel which protrudes further includes at least one, preferably two, rows of holes which extend along the direction of extension of the female connection portion.

Row of holes means that a plurality of holes are located along the direction of extension of the respective connection portions. The holes can have any geometry, i.e., the holes can be rectangular, triangular, or circular, for example. If the holes are circular, they may all have the same radius or a different radius. Furthermore, the holes may be placed equidistantly along the direction of extension of the connection portions. However, the holes may also be placed with different distances from each other. Preferably, the further protruding cover layers have two rows of holes with equidistant holes having the same radii. It should be noted that the holes may also be arranged in any positioning along the direction of extension of the respective connection portion. Since the holes form the contact surface between the floor panel and the casting material, the holes can serve to increase the strength and durability of the sandwich panel - casting joint.

The rows of holes can be used to enable filling the casting material during the manufacturing process of the floor panels.

According to another embodiment, the core layer of the first floor panel and the core layer of the second floor panel are made of polyethylene terephthalate foam, also known as PET foam.

PET foam has high mechanical strength and is therefore well suited for absorbing compressive loads. The requirements for fire protection in rail vehicles are also met by PET foam. In addition, PET foam has high shear strength and shear fracture elongation and is lightweight, making it ideal for use in transportation equipment such as rail vehicles.

According to another embodiment, the core layer of the first floor panel and the core layer of the second floor panel are honeycomb cores.

Lightweight panels can be equipped with honeycomb cores, which contain a honeycomb structure built up from various plastics, cardboard, or other suitable materials in the core layer. The honeycomb cores are shaped to provide maximum stability while maintaining low weight. Lightweight panels with honeycomb cores in various designs are well known from the prior art. For example, the stability of honeycomb core panels can be locally reinforced by filling the honeycomb cores at particularly stressed areas with, for example, expanded glass, expanded clay or other suitable fillers.

According to a second aspect of the invention, a method of manufacturing a floor panel assembly of any one of the above embodiments is provided. The method begins with placing the first floor panel with the first surface on a flat surface (may also be referred to as a mounting surface or reference surface). A female sprue tool is applied to one side of the first floor panel in the next step. In the subsequent step, a clearance (free space) between the female sprue tool and the first floor panel is filled with a casting material. In the next step of the method, the casting material is cured, forming the male connection portion on the first floor panel. In the next step, the second floor panel is placed with the first surface on the flat surface. In the next step of the method, a male sprue tool is applied to one side of the second floor panel. A clearance between the male sprue tool, whose contour is the counterpart of the female sprue tool, is then also filled with a casting material. In the final method step, the casting material is cured to form a female connection portion on the second floor panel.

The fact that the contour of the male sprue tool is the counterpart to the female sprue tool, or to the contour of the female sprue tool, means that the male sprue tool and the female sprue tool, when both are standing on a flat surface, can be inserted into each other in a form-fitting manner, so that the tool undersides, which rest on the flat surface, form a plane. In particular, this thus means that the first vertical distance and the second vertical distance, as described further above, correspond to a distance between an outermost point of a lateral projection of the male sprue tool to an underside of the male sprue tool (and also of the flat surface), respectively, and correspond to a distance between a deepest point of a recess in a side of the female sprue tool to an underside of the female sprue tool, and the first vertical distance and the second vertical distance are equal.

The shape of the protrusion of the male sprue tool corresponds to the shape of the protrusion of the male connection section of the first floor panel and the shape of the recess of the female sprue tool corresponds to the shape of the recess of the female connection section of the second floor panel.

By having the first vertical distance of the female sprue tool and the second vertical distance of the male sprue tool be the same and by placing both the first floor panel and the female sprue tool, or both the second floor panel and the male sprue tool, respectively, on the same flat surface, the male connection portion and the female connection portion can be molded to the first floor panel and the second floor panel such that, when mated with their connection portions, they together form a flat surface. In particular, this also applies to floor panels of different thicknesses that together form a flat surface, since the geometry of the connection portions is referenced only to the top surface of the respective floor panels.

This method makes it possible to join two floor panels with different material thicknesses in such a way that no step or no change in height is noticeable on one side at the transition from the first floor panel to the second floor panel. The two panels of different thicknesses, as well as the male and female sprue tools, are placed on the reference surface in such a way that the planar reference surface aligns all these elements with respect to each other, so that the male and female connection portions can be cast in such a way that the two panels are joined together without steps on one side, despite the different material thicknesses; the sprue tools are brought to the appropriate height by the planar reference surface, i.e., to the same level, so that the connection portions, i.e., the alternating fold or alternating rebate, are molded at the correct height to enable the two panels (of different thickness) to be connected steplessly.

With this approach, it is possible to align floor panels on one side steplessly and flush with each other, even if the floor panels are manufactured with a comparatively large tolerance and have different material thicknesses. There is no vertical offset between the two floor panels on one side.

According to one embodiment of the method, the first floor panel further comprises a first cover layer, a second cover layer opposite the first cover layer, and a core layer therebetween, wherein the first cover layer and the second cover layer protrude different distances relative to and beyond the core layer. Furthermore, the second floor panel also comprises a first cover layer, a second cover layer opposite the first cover layer, and a core layer therebetween, the first cover layer and the second cover layer protruding different distances relative to and beyond the core layer. The step of attaching the female sprue tool is performed such that the female sprue tool abuts with a front surface against the cover layer of the first floor panel resting on the flat surface, and the step of attaching the male sprue tool is performed such that the male sprue tool abuts with a front surface against the cover layer of the second floor panel which is opposite to the cover layer resting on the flat surface.

The core layers and cover layers may be designed in accordance with any of the embodiments described above.

The cover layers, which protrude in relation to the core layers, provide the advantages described above for the floor panels. On the other hand, they facilitate the manufacturing of the floor panels. The protruding parts of the cover layers can be used as stops for attaching the sprue tools. As a result, the clearance for filling the casting material is always the same in size and shape, and the connection portions of different panels are always of the same design and always have the same properties.

According to a further embodiment of the method, that cover layer of the first floor panel which protrudes further has at least one row of holes in the protruding part of the cover layer along the direction of extension of the male connection portion. In addition, the cover layer of the second floor panel that protrudes further has at least one row of holes in the protruding part of the cover layer along the direction of extension of the female connection portion. The first floor panel is placed so that the side with the at least one row of holes rests on the flat surface. Filling with casting material is carried out through the slot formed between the female sprue tool and the first floor panel on the opposite side. The second floor panel is placed so that the side opposite the at least one row of holes rests on the flat surface. The filling with casting material is carried out through the holes of the at least one row of holes.

The farther protruding cover layer of the first floor surface thus rests on the flat surface and the female sprue tool abuts against this side. This forms a slot between the other cover layer, i.e., the shorter protruding cover layer, and the female sprue tool. The casting material is poured through this slot.

In the second floor panel, the shorter protruding cover layer rests on the flat surface. The male sprue tool therefore abuts the farther protruding cover layer, i.e., the cover layer with the at least one row of holes, on the opposite side. The casting material is then poured in through the holes of the at least one row of holes.

The core layers and the cover layers can be designed according to any of the embodiments described above. The rows of holes can also be designed as described above.

In summary, therefore, the invention provides a frictional connection of individual floor panels for floating floors that is capable of transmitting forces resulting from thermal stresses. The invention also automatically levels the floor panels relative to each other to meet the high evenness requirements for the floor surface. Furthermore, the joint or manufacturing concept is designed to compensate for tolerances of the panel machining, shrinkage of the casting material and tolerances of the casting operation.

### BRIEF DESCRIPTION OF THE FIGURES

In the following, the attached drawings are used to illustrate examples in more detail. The illustrations are schematic and not to scale. Identical reference signs refer to identical or similar elements. It is shown in:
- Fig. 1: a schematic representation of a sectional profile of a male connection portion and a female connection portion according to one embodiment.
- Fig. 2: a schematic representation of a second floor panel with a male connection portion and a female sprue tool according to one embodiment.
- Fig. 3: a schematic representation of a female sprue tool and a first floor panel before casting the male connection portion according to one embodiment.
- Fig. 4: a schematic representation of a second floor panel with a female connection portion and a male sprue tool according to one embodiment.
- Fig. 5: a schematic representation of a male sprue tool and a second floor panel before casting the female connection portion according to one embodiment.
- Fig. 6: a schematic representation of a first floor panel having a male connection portion and a second floor panel having a female connection portion, which are connected to each other according to one embodiment.
- Fig. 7: a schematic representation of a first floor panel and a second floor panel with a thickness differing from the first floor panel, which are connected to each other, according to one embodiment.
- Fig. 8: a flow diagram of a method for manufacturing a floor panel assembly according to one embodiment.

### DETAILED DESCRIPTION OF EMBODIMENTS

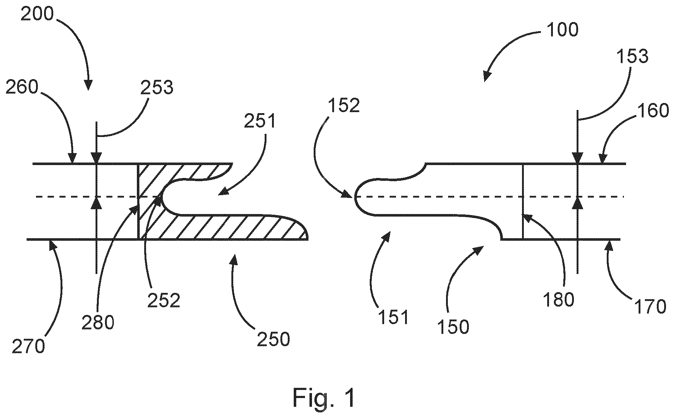

Fig. 1 shows a first floor panel 100 and a second floor panel 200. The first floor panel 100 has a first surface 160, a second surface 170, and a side surface 180. Attached to the side surface 180 is a male connection portion 150 having a protrusion 151 with an outermost point 152. The outermost point 152 is the point on the recess that is furthest out from the side surface 180 (in the direction of the plane of the panel).

The second floor panel 200 has a first surface 260, a second surface 270, and a side surface 280. Attached to the side surface 280 is a female connection portion 250 having a recess 251 with a deepest point 252 (in the direction of the panel plane). The deepest point is the point closest to the side surface 280.

A first vertical distance 153 between the outermost point 152 and the first surface 160 of the first floor panel 100 corresponds to a second vertical distance 253 between the lowest point 252 and the first surface 260 of the second floor panel 200. In that the first vertical distance 153 and the second vertical distance 253 are identical, the first surface 160 of the first floor panel 100 and the first surface 260 of the second floor panel 200 are at the same level when the male connection portion 150 of the first floor panel 100 is connected to the female connection portion 250 of the second floor panel 200. In other words, the first surface 160 of the first floor panel 100 and the first surface 260 of the second floor panel 200 together form a flat surface in the floor panel assembly, which corresponds to the tread surface of the floor.

In this embodiment, the male connection portion 150 and the female connection portion 250 are molded from polyurethane resin (PUR resin), a two-component rapid casting resin. However, other suitable resins or plastics are also possible.

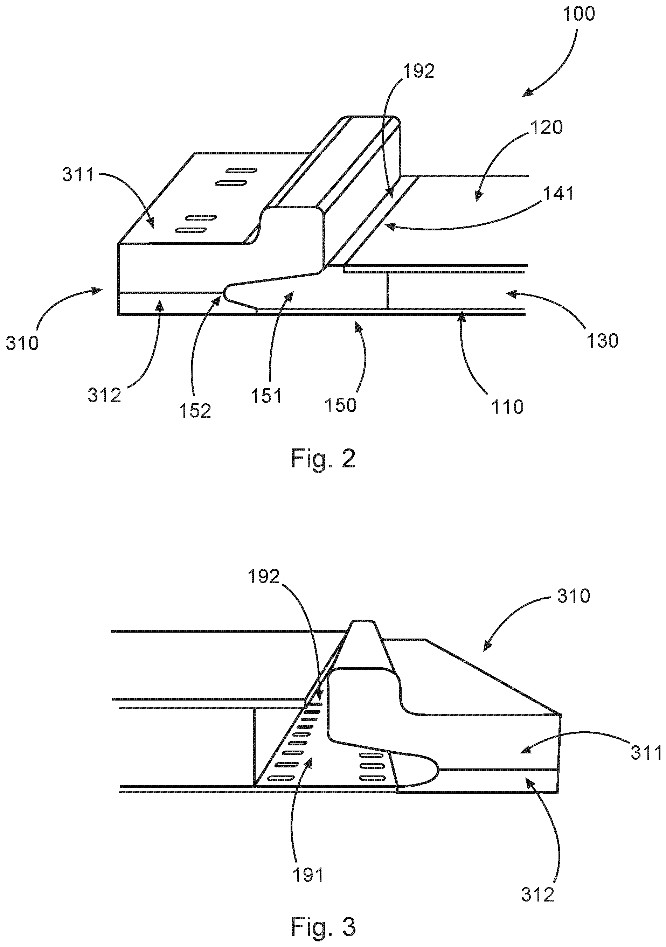

Fig. 2 shows a first floor panel 100 analogous to the first floor panel 100 shown in Fig. 1 during the manufacturing process. However, the first floor panel 100 here comprises a core layer 130 arranged between two cover layers 110, 120. The two cover layers 110, 120 protrude with respect to the core layer 130 in the direction of the side surface 180 and partially receive the male connection portion 150 therebetween. The protruding portions of the cover layers 110, 120 are of different lengths. Also shown is a female sprue tool 310 provided for sprueing or casting the male connection portion 150. A floor surface of the tool rests on a flat surface, as does the first surface 160. The female sprue tool 310 abuts the first cover layer 110. The second cover layer 120 protrudes less far beyond the core layer 130 than the first cover layer 110, spacing the second cover layer 120 from the female sprue tool 310 and forming a slot 192 between the second cover layer 120 and the female sprue tool 310 that is used to fill the sprue or casting material. The female sprue tool 310 includes a first tool portion 311 and a second tool portion 312 to facilitate removal of the female sprue tool 310 from the first floor panel 100 after the male connection portion has cured. However, the female sprue tool 310 may be a single piece, or may comprise more than two pieces.

Fig. 3 shows the first floor panel 100 from Fig. 1, but before the casting material has been poured in. Between the female sprue tool 310 and the floor panel is a clearance 191, which is not occupied by the core layer 130 and is intended to receive the casting material. The casting material can be filled through a slot 192, which is located between the second cover layer 120 and the female sprue tool 310. The female sprue tool comprises a first tool portion 311 and a second tool portion 312, which may be interconnected, for example, by a threaded or clamped connection.

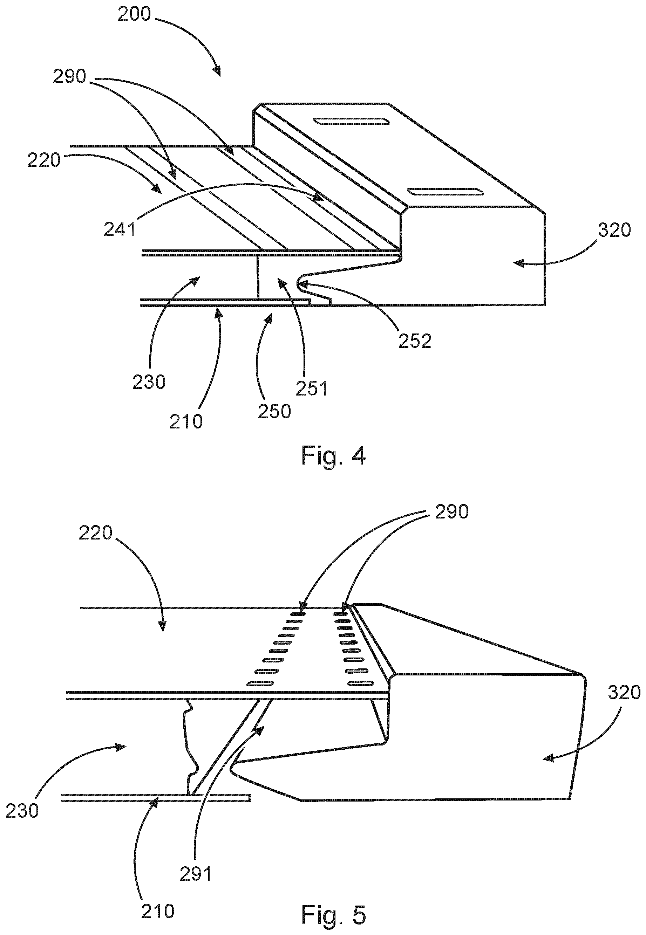

Fig. 4 shows a second floor panel 200 analogous to the second floor panel 200 shown in Fig. 1 during the manufacturing process. However, the second floor panel 200 consists here of a core layer 230 arranged between two cover layers 210, 220. The two cover layers 210, 220 protrude with respect to the core layer 230 in the direction of the side surface 280 and partially receive the female connection portion 250 therebetween. The protruding portions of the cover layers 210, 220 are of different lengths. Also shown is a male sprue tool 320 which is provided to sprue or cast the female connection portion 250. An underside of the tool rests on a flat surface, as does the second surface 270. The protruding portion of the second surface layer 220 is longer than the protruding portion of the first surface layer 210, has two rows of holes 290, and abuts the male sprue tool 320.

The casting material has been poured through the holes of the two rows of holes 290.

Fig. 5 shows the second floor panel 200 from Fig. 4, but before the casting material has been poured in. Between the male sprue tool 320 and the floor panel is a free space or clearance 291, which is not occupied by the core layer 230 and is intended to receive the casting material. The casting material can be filled via the two rows of holes 290 in a vertical sprue process.

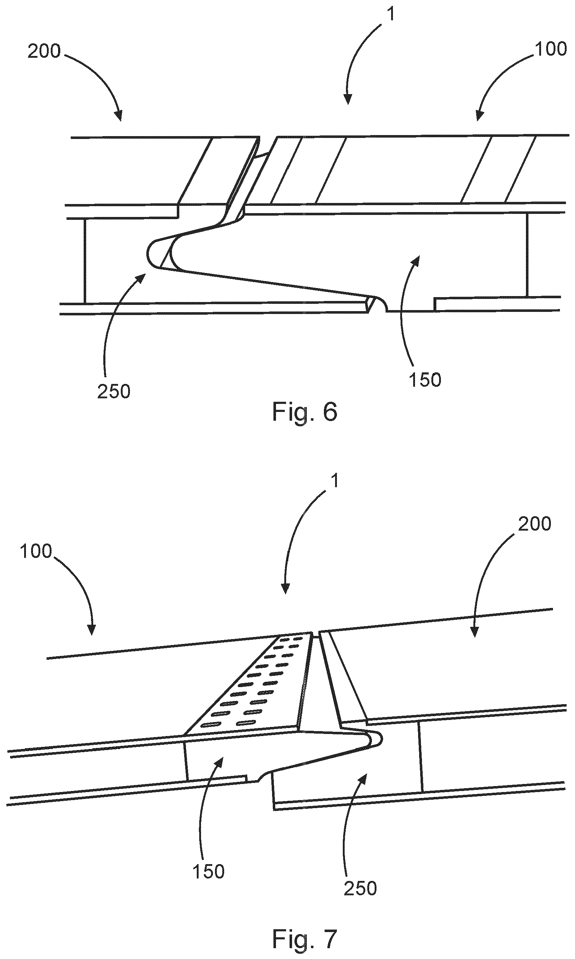

Fig. 6 shows a completed floor panel assembly 1 comprising a first floor panel 100 and a second floor panel 200. The first floor panel 100 is inserted with the male connection portion 150 into the female connection portion 250 of the second floor panel 200, thereby connecting the first floor panel 100 and the second floor panel 200. Due to the identity of the first vertical distance 153 and the second vertical distance 253 described with reference to Fig. 1, the first floor panel 100 and the second floor panel 200 together form a flat surface of the floor panel assembly 1.

Fig. 7 shows a floor panel assembly 1 similar to the floor panel assembly 1 of Fig. 6. However, in this embodiment, the second floor panel 200 has a greater thickness than the first floor panel 100. It should be noted, however, that in other embodiments the first floor panel 100 may have a greater thickness than the second floor panel 200. Since the first vertical distance 153 and the second vertical distance 253 are referenced only to the first surfaces 160, 170 and the first cover layers 110, 210 of the floor panels 100, 200, respectively, floor panels 100, 200 of different thicknesses together form a flat or even surface of the floor panel assembly 1.

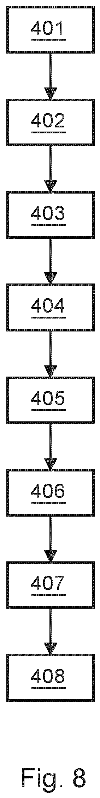

Fig. 8 is a flowchart of an exemplary method of manufacturing a floor panel assembly according to the present disclosure. In step 401, the first floor panel 100 is placed on a flat surface with the first surface 160.

Subsequently, in step 402, a female sprue tool 310 is applied to one side of the first floor panel 100. Preferably, the first floor panel 100 has a first cover layer 110 and a second cover layer 120 and a core layer 130 therebetween, and the first cover layer 110 and the second cover layer 120 protrude different distances with respect to the core layer 130. The first cover layer 110 is located on the side of the first surface 160. Preferably, the first cover layer 110 protrudes further and has two rows of holes along the direction of extension of the male connection portion 150 that will be cast on later. The female sprue tool 310 is configured and designed as described with reference to Fig. 2, and is applied to the first floor panel 100 as described with reference to Figs. 2 and 3 such that the female sprue tool 310 abuts the first cover layer 110.

After the tool is applied, in step 403, the clearance 191 formed between the female sprue tool 310 and the first floor panel 100 is filled with casting material.

In step 404, the casting material is cured, thereby forming the male connection portion 150. When a two-component casting material is used, this is done by waiting. For other casting materials, the techniques known to those skilled in the art are used.

In step 405, a second floor panel 200 is placed on a flat surface with a first surface 260.

In step 406, a male sprue tool 320 is applied to one side of the second floor panel 200, which is preferably configured like the first floor panel 100, but may also be configured as described with reference to another embodiment of the floor panel assembly. The male sprue tool is thereby attached as described with reference to Figs. 4 and 5.

In step 407, the clearance between the second floor panel 200 and the male sprue tool 320 is filled with casting material, as in step 403.

In step 408, the casting or molding material is cured as in step 404, thereby forming the female connection portion 250.

Steps 401 to 404 and 405 to 408 can also be performed simultaneously, i.e., the male connection section 150 and the female connection section 250 can be produced simultaneously. In particular, both a male connection portion 150 on one side and a female connection portion on the opposite side can also be cast on the same floor panel.

In addition, it should be noted that "comprising" or "including" does not exclude other elements or steps, and "one" or "a/an" does not exclude a plurality. It should further be noted that features or steps that have been described with reference to any of the above embodiments may also be used in combination with other features or steps of other embodiments described above. Reference signs in the claims are not to be regarded as a limitation.

### LIST OF REFERENCE SIGNS

- 1: Floor panel assembly
- 100: first floor panel
- 110: first cover layer
- 120: second cover layer
- 130: core layer
- 141: first edge
- 150: male connection portion
- 151: protrusion
- 152: outermost point
- 153: first vertical distance
- 160: first surface
- 170: second surface
- 180: side surface
- 190: rows of holes
- 191: clearance
- 192: slot
- 200: second floor panel
- 210: first cover layer
- 220: second cover layer
- 230: core layer
- 241: first edge
- 250: female connection portion
- 251: recess
- 252: lowest point
- 253: second vertical distance
- 260: first surface
- 270: second surface
- 280: side surface
- 290: rows of holes
- 291: clearance
- 310: female sprue tool
- 311: first tool part
- 312: second tool part
- 320: male sprue tool

- 400: method
- 401: placing a first floor panel
- 402: attaching a female sprue tool
- 403: filling with casting material
- 404: curing
- 405: placing a second floor panel
- 406: attaching a male sprue tool
- 407: filling with casting material
- 408: curing

## Claims

1. A floor panel assembly (1), comprising:
a first floor panel (100) and a second floor panel (200); and
a male connection portion (150) and a female connection portion (250);
wherein the male connection portion (150) is attached to a side surface (180) of the first floor panel (100);
wherein the male connection portion (150) comprises a protrusion (151) extending along the male connection portion (150);
wherein the female connection portion (250) is attached to a side surface (280) of the second floor panel (200);
wherein the female connection portion (250) comprises a recess (251) extending within the female connection portion (250) along the female connection portion (250);
wherein a first perpendicular distance (153) from a first surface (160) of the first floor panel (100) to an outermost point (152) of the protrusion (151) corresponds to a second perpendicular distance (253) from a first surface (260) of the second floor panel (200) to a deepest point (252) of the recess (251), such that the floor panel assembly (1) has a flat surface when the male connection portion (150) is inserted into the female connection portion (250) in a form-fitting manner; **characterized in that**
the thickness of the first floor panel (100) differs from the thickness of the second floor panel (200).

2. The floor panel assembly according to claim 1, wherein the first floor panel (100) further comprises:
a first cover layer (110) and a second cover layer (120) opposite the first cover layer (110);
a core layer (130) disposed between the first cover layer (110) and the second cover layer (120); and
wherein the second floor panel (200) further comprises:
a first cover layer (210) and a second cover layer (220) opposite the first cover layer (110);
a core layer (230) disposed between the first cover layer (210) and the second cover layer (220).

3. The floor panel assembly (1) according to claim 2, wherein the first cover layer (110) and the second cover layer (120) of the first floor panel (100) protrude toward the side surface (180) of the first floor panel (100) with respect to the core layer (130) of the first floor panel (100) and receive the male connection portion (150) at least partially therebetween; and
wherein the first cover layer (210) and the second cover layer (220) of the second floor panel (200) protrude toward the side surface (280) of the second floor panel (200) with respect to the core layer (230) and receive the female connection portion (250) at least partially therebetween.

4. The floor panel assembly (1) according to claim 3, wherein the first cover layer (110) and the second cover layer (120) of the first floor panel (100) protrude different distances beyond the core layer (130) of the first floor panel (100); wherein the first cover layer (210) and the second cover layer (220) of the second floor panel (200) protrude different distances beyond the core layer (230) of the second floor panel (200);
wherein that cover layer of the first floor panel (100) which protrudes further includes at least one row of holes in the protruding part of the cover layer along the direction of extension of the male connection portion (150); and
wherein that cover layer of the second floor panel (200) which protrudes further has at least one row of holes in the protruding part of the cover layer along the direction of extension of the female connection portion (250).

5. The floor panel assembly (1) according to any one of claims 2 to 4, wherein the core layer (130) of the first floor panel (100) and the core layer (230) of the second floor panel (200) are made of polyethylene terephthalate foam, PET foam.

6. The floor panel assembly (1) according to any one of claims 2 to 4, wherein the core layer (130) of the first floor panel (100) and the core layer (230) of the second floor panel (200) are honeycomb cores.

7. A method (400) of manufacturing a floor panel assembly (1) as defined in any one of claims 1 to 6, the method comprising the steps of:
placing (401) the first floor panel (100) with the first surface (160) on a flat surface;
attaching (402) a female sprue tool (310) to a side of the first floor panel (100) on the flat surface;
filling (403) a clearance (191) between the female sprue tool (310) and the first floor panel (100) with a casting material;
curing (404) the casting material to form a male connection portion (150) on the first floor panel (100);
placing (405) the second floor panel (200) with the first surface (260) on the flat surface;
attaching (406) a male sprue tool (320) to a side of the second floor panel (200) on the flat surface;
filling (407) a clearance (291) between the male sprue tool (320), whose contour is the counterpart of the female sprue tool (310), and the second floor panel (200) with a casting material;
curing (408) the casting material to form a female connection portion (250) on the second floor panel (200).

8. The method (400) of claim 7, wherein the first floor panel (100) further comprises:
a first cover layer (110) and a second cover layer (120) opposite the first cover layer (110);
a core layer (130) arranged between the first cover layer (110) and the second cover layer (120), the first cover layer (110) and the second cover layer (120) protruding different distances relative to and beyond the core layer (130);
wherein the second floor panel (200) further comprises:
a first cover layer (210) and a second cover layer (220) opposite the first cover layer (110);
a core layer (230) disposed between the first cover layer (210) and the second cover layer (220), the first cover layer (210) and the second cover layer (220) protruding different distances relative to and beyond the core layer (230); wherein the step of attaching (402) the female sprue tool (310) is performed such that the female sprue tool (310) abuts the cover layer of the first floor panel (100) resting on the flat surface; and
wherein the step of attaching (406) the male sprue tool (320) is performed such that the male sprue tool (320) abuts the cover layer of the second floor panel (200) which is opposite to the cover layer resting on the flat surface.

9. The method (400) according to claim 8, wherein that cover layer of the first floor panel (100) that protrudes further beyond the first floor panel comprises at least one row of holes in the protruding part of the cover layer along the direction of extension of the male connection portion (150); wherein that cover layer of the second floor panel (200) that protrudes further beyond the second floor panel comprises at least one row of holes in the protruding part of the cover layer along the direction of extension of the female connection portion (250);
wherein the placing (401) of the first floor panel (100) is performed such that the side with the at least one row of holes rests on the flat surface, and wherein the filling (403) with casting material is performed through the slot formed between the female sprue tool (310) and the first floor panel (100) on the opposite side; and
wherein the placing (405) of the second floor panel (200) is performed such that the side opposite the at least one row of holes rests on the flat surface, and wherein the filling (407) with casting material is performed through the holes in the at least one row of holes.

## Patentansprüche

1. Bodenplattenanordnung (1), umfassend:
eine erste Bodenplatte (100) und eine zweite Bodenplatte (200); und
einen männlichen Verbindungsabschnitt (150) und einen weiblichen Verbindungsabschnitt (250);
wobei der männliche Verbindungsabschnitt (150) an einer Seitenfläche (180) der ersten Bodenplatte (100) befestigt ist;
wobei der männliche Verbindungsabschnitt (150) einen Vorsprung (151) umfasst, der sich entlang des männlichen Verbindungsabschnitts (150) erstreckt;
wobei der weibliche Verbindungsabschnitt (250) an einer Seitenfläche (280) der zweiten Bodenplatte (200) befestigt ist;
wobei der weibliche Verbindungsabschnitt (250) eine Aussparung (251) umfasst, die sich innerhalb des weiblichen Verbindungsabschnitts (250) entlang des weiblichen Verbindungsabschnitts (250) erstreckt;
wobei ein erster senkrechter Abstand (153) von einer ersten Oberfläche (160) der ersten Bodenplatte (100) zu einem äußersten Punkt (152) des Vorsprungs (151) einem zweiten senkrechten Abstand (253) von einer ersten Oberfläche (260) der zweiten Bodenplatte (200) zu einem tiefsten Punkt (252) der Aussparung (251) entspricht, so dass die Bodenplattenanordnung (1) eine flache Oberfläche aufweist, wenn der männliche Verbindungsabschnitt (150) formschlüssig in den weiblichen Verbindungsabschnitt (250) eingesetzt ist; **dadurch gekennzeichnet, dass**
sich die Dicke der ersten Bodenplatte (100) von der Dicke der zweiten Bodenplatte (200) unterscheidet.

2. Bodenplattenanordnung nach Anspruch 1, wobei die erste Bodenplatte (100) ferner umfasst:
eine erste Deckschicht (110) und eine zweite Deckschicht (120) gegenüber der ersten Deckschicht (110);
eine Kernschicht (130), die zwischen der ersten Deckschicht (110) und der zweiten Deckschicht (120) angeordnet ist; und
wobei die zweite Bodenplatte (200) ferner umfasst:
eine erste Deckschicht (210) und eine zweite Deckschicht (220) gegenüber der ersten Deckschicht (110);
eine Kernschicht (230), die zwischen der ersten Deckschicht (210) und der zweiten Deckschicht (220) angeordnet ist.

3. Bodenplattenanordnung (1) nach Anspruch 2, wobei die erste Deckschicht (110) und die zweite Deckschicht (120) der ersten Bodenplatte (100) in Bezug auf die Kernschicht (130) der ersten Bodenplatte (100) in Richtung der Seitenfläche (180) der ersten Bodenplatte (100) vorstehen und den männlichen Verbindungsabschnitt (150) zumindest teilweise dazwischen aufnehmen; und
wobei die erste Deckschicht (210) und die zweite Deckschicht (220) der zweiten Bodenplatte (200) in Bezug auf die Kernschicht (230) in Richtung der Seitenfläche (280) der zweiten Bodenplatte (200) vorstehen und den weiblichen Verbindungsabschnitt (250) zumindest teilweise dazwischen aufnehmen.

4. Bodenplattenanordnung (1) nach Anspruch 3, wobei die erste Deckschicht (110) und die zweite Deckschicht (120) der ersten Bodenplatte (100) in unterschiedlichen Abständen über die Kernschicht (130) der ersten Bodenplatte (100) vorstehen;
wobei die erste Deckschicht (210) und die zweite Deckschicht (220) der zweiten Bodenplatte (200) in unterschiedlichen Abständen über die Kernschicht (230) der zweiten Bodenplatte (200) vorstehen;
wobei die Deckschicht der ersten Bodenplatte (100), die vorsteht, ferner mindestens eine Reihe von Löchern in dem vorstehenden Teil der Deckschicht entlang der Erstreckungsrichtung des männlichen Verbindungsabschnitts (150) aufweist; und
wobei die Deckschicht der zweiten Bodenplatte (200), die vorsteht, ferner mindestens eine Reihe von Löchern in dem vorstehenden Teil der Deckschicht entlang der Erstreckungsrichtung des weiblichen Verbindungsabschnitts (250) aufweist.

5. Bodenplattenanordnung (1) nach einem der Ansprüche 2 bis 4, wobei die Kernschicht (130) der ersten Bodenplatte (100) und die Kernschicht (230) der zweiten Bodenplatte (200) aus Polyethylenterephthalatschaum, PET-Schaum, hergestellt sind.

6. Bodenplattenanordnung (1) nach einem der Ansprüche 2 bis 4, wobei die Kernschicht (130) der ersten Bodenplatte (100) und die Kernschicht (230) der zweiten Bodenplatte (200) Wabenkerne sind.

7. Verfahren (400) zum Herstellen einer Bodenplattenanordnung (1) nach einem der Ansprüche 1 bis 6, wobei das Verfahren die folgenden Schritte umfasst:
Platzieren (401) der ersten Bodenplatte (100) mit der ersten Fläche (160) auf einer ebenen Fläche;
Befestigen (402) eines weiblichen Angusswerkzeugs (310) an einer Seite der ersten Bodenplatte (100) auf der ebenen Fläche;
Füllen (403) eines Zwischenraums (191) zwischen dem weiblichen Angusswerkzeug (310) und der ersten Bodenplatte (100) mit einem Gussmaterial;
Aushärten (404) des Gussmaterials, um einen männlichen Verbindungsabschnitt (150) auf der ersten Bodenplatte (100) zu bilden;
Platzieren (405) der zweiten Bodenplatte (200) mit der ersten Fläche (260) auf der ebenen Fläche;
Befestigen (406) eines männlichen Angusswerkzeugs (320) an einer Seite der zweiten Bodenplatte (200) auf der ebenen Fläche;
Füllen (407) eines Zwischenraums (291) zwischen dem männlichen Angusswerkzeug (320), dessen Kontur das Gegenstück des weiblichen Angusswerkzeugs (310) ist, und der zweiten Bodenplatte (200) mit einem Gussmaterial;
Aushärten (408) des Gussmaterials, um einen weiblichen Verbindungsabschnitt (250) auf der zweiten Bodenplatte (200) zu bilden.

8. Verfahren (400) nach Anspruch 7, wobei die erste Bodenplatte (100) ferner umfasst:
eine erste Deckschicht (110) und eine zweite Deckschicht (120) gegenüber der ersten Deckschicht (110);
eine Kernschicht (130), die zwischen der ersten Deckschicht (110) und der zweiten Deckschicht (120) angeordnet ist, wobei die erste Deckschicht (110) und die zweite Deckschicht (120) in unterschiedlichen Abständen relativ zu und über die Kernschicht (130) vorstehen;
wobei die zweite Bodenplatte (200) ferner umfasst:
eine erste Deckschicht (210) und eine zweite Deckschicht (220) gegenüber der ersten Deckschicht (110);
eine Kernschicht (230), die zwischen der ersten Deckschicht (210) und der zweiten Deckschicht (220) angeordnet ist, wobei die erste Deckschicht (210) und die zweite Deckschicht (220) in unterschiedlichen Abständen relativ zu und über die Kernschicht (230) vorstehen;
wobei der Schritt des Befestigens (402) des weiblichen Angusswerkzeugs (310) derart durchgeführt wird, dass das weibliche Angusswerkzeug (310) an der Deckschicht der ersten Bodenplatte (100) anliegt, die auf der ebenen Fläche aufliegt; und
wobei der Schritt des Befestigens (406) des männlichen Angusswerkzeugs (320) derart durchgeführt wird, dass das männliche Angusswerkzeug (320) an der Deckschicht der zweiten Bodenplatte (200) anliegt, die der Deckschicht gegenüberliegt, die auf der ebenen Fläche aufliegt.

9. Verfahren (400) nach Anspruch 8, wobei die Deckschicht der ersten Bodenplatte (100), die weiter über die erste Bodenplatte vorsteht, mindestens eine Reihe von Löchern in dem vorstehenden Teil der Deckschicht entlang der Erstreckungsrichtung des männlichen Verbindungsabschnitts (150) umfasst; wobei die Deckschicht der zweiten Bodenplatte (200), die weiter über die zweite Bodenplatte vorsteht, mindestens eine Reihe von Löchern in dem vorstehenden Teil der Deckschicht entlang der Erstreckungsrichtung des weiblichen Verbindungsabschnitts (250) umfasst;
wobei das Platzieren (401) der ersten Bodenplatte (100) derart durchgeführt wird, dass die Seite mit der mindestens einen Reihe von Löchern auf der ebenen Fläche aufliegt, und wobei das Füllen (403) mit Gussmaterial durch den Schlitz durchgeführt wird, der zwischen dem weiblichen Angusswerkzeug (310) und der ersten Bodenplatte (100) auf der gegenüberliegenden Seite gebildet ist; und
wobei das Platzieren (405) der zweiten Bodenplatte (200) derart durchgeführt wird, dass die Seite gegenüber der mindestens einen Reihe von Löchern auf der ebenen Fläche aufliegt, und wobei das Füllen (407) mit Gussmaterial durch die Löcher in der mindestens einen Reihe von Löchern durchgeführt wird.

## Revendications

1. Ensemble de panneau de plancher (1), comprenant:
un premier panneau de plancher (100) et un second panneau de plancher (200); et
une partie de connexion mâle (150) et une partie de connexion femelle (250);
dans lequel la partie de connexion mâle (150) est fixée à une surface latérale (180) du premier panneau de plancher (100);
dans lequel la partie de connexion mâle (150) comprend une saillie (151) s'étendant le long de la partie de connexion mâle (150);
dans lequel la partie de connexion femelle (250) est fixée à une surface latérale (280) du second panneau de plancher (200);
dans lequel la partie de connexion femelle (250) comprend un évidement (251) s'étendant à l'intérieur de la partie de connexion femelle (250) le long de la partie de connexion femelle (250);
dans lequel une première distance perpendiculaire (153) d'une première surface (160) du premier panneau de plancher (100) à un point le plus à l'extérieur (152) de la saillie (151) correspond à une seconde distance perpendiculaire (253) d'une première surface (260) du second panneau de plancher (200) à un point le plus profond (252) de l'évidement (251), de sorte que l'ensemble de panneau de plancher (1) a une surface plate lorsque la partie de connexion mâle (150) est insérée dans la partie de connexion femelle (250) d'une manière à ajustement de forme; **caractérisé en ce que**
l'épaisseur du premier panneau de plancher (100) diffère de l'épaisseur du second panneau de plancher (200).

2. Ensemble de panneau de plancher selon la revendication 1, dans lequel le premier panneau de plancher (100) comprend en outre:
une première couche de couverture (110) et une seconde couche de couverture (120) opposée à la première couche de couverture (110);
une couche centrale (130) disposée entre la première couche de couverture (110) et la seconde couche de couverture (120); et
dans lequel le second panneau de plancher (200) comprend en outre:
une première couche de couverture (210) et une seconde couche de couverture (220) opposée à la première couche de couverture (110);
une couche centrale (230) disposée entre la première couche de couverture (210) et la seconde couche de couverture (220).

3. Ensemble de panneau de plancher (1) selon la revendication 2, dans lequel la première couche de couverture (110) et la seconde couche de couverture (120) du premier panneau de plancher (100) font saillie vers la surface latérale (180) du premier panneau de plancher (100) par rapport à la couche centrale (130) du premier panneau de plancher (100) et reçoivent la partie de connexion mâle (150) au moins partiellement entre elles; et
dans lequel la première couche de couverture (210) et la seconde couche de couverture (220) du second panneau de plancher (200) font saillie vers la surface latérale (280) du second panneau de plancher (200) par rapport à la couche centrale (230) et reçoivent la partie de connexion femelle (250) au moins partiellement entre elles.

4. Ensemble de panneau de plancher (1) selon la revendication 3, dans lequel la première couche de couverture (110) et la seconde couche de couverture (120) du premier panneau de plancher (100) font saillie à des distances différentes au-delà de la couche centrale (130) du premier panneau de plancher (100);
dans lequel la première couche de couverture (210) et la seconde couche de couverture (220) du second panneau de plancher (200) font saillie à des distances différentes au-delà de la couche centrale (230) du second panneau de plancher (200);
dans lequel la couche de couverture du premier panneau de plancher (100) qui fait saillie comprend en outre au moins une rangée de trous dans la partie en saillie de la couche de couverture le long de la direction d'extension de la partie de connexion mâle (150); et
dans lequel la couche de couverture du second panneau de plancher (200) qui fait saillie comprend en outre au moins une rangée de trous dans la partie en saillie de la couche de couverture le long de la direction d'extension de la partie de connexion femelle (250).

5. Ensemble de panneau de plancher (1) selon l'une quelconque des revendications 2 à 4, dans lequel la couche centrale (130) du premier panneau de plancher (100) et la couche centrale (230) du second panneau de plancher (200) sont constituées de mousse de polyéthylène téréphtalate, de mousse de PET.

6. Ensemble de panneau de plancher (1) selon l'une quelconque des revendications 2 à 4, dans lequel la couche centrale (130) du premier panneau de plancher (100) et la couche centrale (230) du second panneau de plancher (200) sont des noyaux en nid d'abeilles.

7. Procédé (400) de fabrication d'un ensemble de panneau de plancher (1) tel que défini dans l'une quelconque des revendications 1 à 6, le procédé comprenant les étapes consistant à:
placer (401) le premier panneau de plancher (100) avec la première surface (160) sur une surface plate;
fixer (402) un outil de moulage femelle (310) à un côté du premier panneau de plancher (100) sur la surface plate;
remplir (403) un espace (191) entre l'outil de moulage femelle (310) et le premier panneau de plancher (100) avec un matériau de coulée;
durcir (404) le matériau de coulée pour former une partie de connexion mâle (150) sur le premier panneau de plancher (100);
placer (405) le second panneau de plancher (200) avec la première surface (260) sur la surface plate;
fixer (406) un outil de moulage mâle (320) à un côté du second panneau de plancher (200) sur la surface plate;
remplir (407) un espace (291) entre l'outil de moulage mâle (320), dont le contour est la contrepartie de l'outil de moulage femelle (310), et le second panneau de plancher (200) avec un matériau de coulée;
durcir (408) le matériau de coulée pour former une partie de connexion femelle (250) sur le second panneau de plancher (200).

8. Procédé (400) selon la revendication 7, dans lequel le premier panneau de plancher (100) comprend en outre:
une première couche de couverture (110) et une seconde couche de couverture (120) opposée à la première couche de couverture (110);
une couche centrale (130) agencée entre la première couche de couverture (110) et la seconde couche de couverture (120), la première couche de couverture (110) et la seconde couche de couverture (120) faisant saillie à des distances différentes par rapport à et au-delà de la couche centrale (130);
dans lequel le second panneau de plancher (200) comprend en outre:
une première couche de couverture (210) et une seconde couche de couverture (220) opposée à la première couche de couverture (110);
une couche centrale (230) disposée entre la première couche de couverture (210) et la seconde couche de couverture (220), la première couche de couverture (210) et la seconde couche de couverture (220) faisant saillie à des distances différentes par rapport à et au-delà de la couche centrale (230);
dans lequel l'étape consistant à fixer (402) l'outil de moulage femelle (310) est réalisée de sorte que l'outil de moulage femelle (310) vient en butée contre la couche de couverture du premier panneau de plancher (100) reposant sur la surface plate; et
dans lequel l'étape consistant à fixer (406) l'outil de moulage mâle (320) est réalisée de sorte que l'outil de moulage mâle (320) vient en butée contre la couche de couverture du second panneau de plancher (200) qui est opposée à la couche de couverture reposant sur la surface plate.

9. Procédé (400) selon la revendication 8, dans lequel la couche de couverture du premier panneau de plancher (100) qui fait saillie au-delà du premier panneau de plancher comprend au moins une rangée de trous dans la partie en saillie de la couche de couverture le long de la direction d'extension de la partie de connexion mâle (150) ; dans lequel la couche de couverture du second panneau de plancher (200) qui fait saillie au-delà du second panneau de plancher comprend au moins une rangée de trous dans la partie en saillie de la couche de couverture le long de la direction d'extension de la partie de connexion femelle (250);
dans lequel le placement (401) du premier panneau de plancher (100) est réalisé de sorte que le côté avec l'au moins une rangée de trous repose sur la surface plate, et dans lequel le remplissage (403) avec le matériau de coulée est réalisé à travers la fente formée entre l'outil de moulage femelle (310) et le premier panneau de plancher (100) sur le côté opposé; et
dans lequel le placement (405) du second panneau de plancher (200) est réalisé de sorte que le côté opposé à l'au moins une rangée de trous repose sur la surface plate, et dans lequel le remplissage (407) avec le matériau de coulée est réalisé à travers les trous dans l'au moins une rangée de trous.
